# EUROPEAN PATENT APPLICATION

(11) **EP 3 858 920 A1**
(43) Date of publication of application: **04.08.2021**
(21) Application number: 19867812.0
(22) Date of filing: 18.09.2019
(51) Int. Cl.: C08L 71/12, C08L 77/00, C08L 77/02, C08K 3/04, C08K 3/34, C08L 25/08

(54) **POLYAMIDE/POLYPHENYLENE ETHER RESIN COMPOSITION AND MOLDED PRODUCT USING SAME**

(30) Priority: 28.09.2018 KR 20180116385
(71) Applicant: Lotte Chemical Corporation, Seoul, 05551 (KR)
(72) Inventor: CHOI, Wonyoung, Uiwang-si, Gyeonggi-do 16073 (KR); KIM, Sehyun, Uiwang-si, Gyeonggi-do 16073 (KR); BAN, Kyunha, Uiwang-si, Gyeonggi-do 16073 (KR); JIN, Youngsub, Uiwang-si, Gyeonggi-do 16073 (KR)
(74) Representative: Agasse, Stéphane
(86) International application number: PCT/KR2019/012069
(87) International publication number: WO 2020/067673

(57) **Abstract**

The present invention relates to a polyamide/polyphenylene ether resin composition and a molded product using same, and the polyamide/polyphenylene ether resin composition includes, based on 100 parts by weight of a base resin which includes (A) 30 wt% to 60 wt% of a polyphenylene ether resin, (B) 25 wt% to 55 wt% of polyamide 66 resin, and (C) 5 wt% to 40 wt% of a polyamide resin containing a long aliphatic chain, (D) 2 parts by weight to 6 parts by weight of an impact modifier, (E) 0.5 parts by weight to 1 part by weight of a compatibilizer, and (F) 10 parts by weight to 30 parts by weight of a plate-shaped filler, wherein a weight ratio (B:C) of the (B) polyamide 66 resin and the (C) polyamide resin containing a long aliphatic chain satisfies 1:1 to 8:1.

## Description

### [Technical Field]

A polyamide/polyphenylene ether resin composition and a molded product using the same are disclosed.

### [Background Art]

Plastic materials are inferior to metals or ceramic materials in terms of heat resistance, flame retardancy, and the like but are widely used as industrial materials covering from daily necessities to automobiles, and electricity, electronics, and industrial fields due to their light weight, design freedom, and excellent molding processability.

The plastic materials have been developed into various types from commodity plastics to engineering plastics and thus are widely applied in fields that require various functions and performances.

Among these, polyphenylene ether (PPE) has excellent electrical and mechanical properties and also has a high heat deflection temperature, so it may be used in a wide range of fields as an engineering plastic material.

The polyphenylene ether has become a useful industrial material in a blend with high-impact polystyrene based on its excellent heat resistance. Relatively recently, reaction extrusion technology of making imcompatible blends be commercialized by a chemical method has been adopted to obtain a polyamide/polyphenylene ether alloy by adding a compatibilizer as a third component to a polyamide/polyphenylene ether blend.

Such polyamide/polyphenylene ether effectively compensates for drawbacks of each constituent resin and thus balances properties such as heat resistance, impact resistance, chemical resistance, and the like, and accordingly, is used for automobile exterior parts such as wheel caps, junction boxes, and the like and under-the-hood parts.

On the other hand, in recent years, there has been a need for a plastic exterior part material capable of on-line electrostatic painting which may be electrostatically painted simultaneously with other metal material parts. When applied to these uses, a conductive filler such as carbon nanotubes, carbon black, or the like may be added to the polyamide/polyphenylene ether to impart conductivity thereto, and this conductive polyamide/polyphenylene ether is being applied to automobile fender parts and the like. The conductive polyamide/polyphenylene ether may be electrostatically painted simultaneously with other metal material parts.

However, since polyamide generally has high hygroscopicity, the polyamide/polyphenylene ether including the polyamide is vulnerable to moisture. The polyamide may absorb moisture in the subsequent processes of assembly, painting, and/or the like after manufacturing a molded product through injection molding and the like, and thus bring about a dimensional change of the molded product. Accordingly, the molded product should be stored under a low humidity environment and thus may be difficult to maintain/manage.

In addition, even if the polyamide/polyphenylene ether exhibits a high heat deflection temperature, the resin may be decomposed even by a small amount of moisture, when manufactured into the molded product at a high temperature. In order to control this, various methods of controlling molding process conditions have been suggested.

Accordingly, there are needs for a polyamide/polyphenylene ether resin composition capable of suppressing the hygroscopicity of polyamide and the resulting dimensional deformation, and having an excellent appearance for painting.

### [Disclosure]

### [Description of the Drawings]

### [Technical Problem]

A polyamide/polyphenylene ether resin composition capable of suppressing hygroscopicity of polyamide and having improved appearance and the resulting dimensional deformation, and a molded product using the same, are provided.

### [Technical Solution]

According to one embodiment, a polyamide/polyphenylene ether resin composition includes, based on 100 parts by weight of a base resin which includes (A) 30 wt% to 60 wt% of a polyphenylene ether resin, (B) 25 wt% to 55 wt% of polyamide 66 resin, and (C) 5 wt% to 40 wt% of a polyamide resin containing a long aliphatic chain, (D) 2 parts by weight to 6 parts by weight of an impact modifier, (E) 0.5 parts by weight to 1 part by weight of a compatibilizer, and (F) 10 parts by weight to 30 parts by weight of a plate-shaped filler, wherein a weight ratio (B:C) of the (B) polyamide 66 resin and the (C) polyamide resin containing a long aliphatic chain satisfies 1:1 to 8:1.

The (F) plate-shaped filler may include talc, mica, or a combination thereof.

The (C) polyamide resin containing a long aliphatic chain may include at least one selected from polyamide 610, polyamide 612, polyamide 1010, polyamide 1012, and polyamide 1212.

The (A) polyphenylene ether resin may include poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-trimethyl-1,4-phenylene) ether, a copolymer of poly(2,6-dimethyl-1,4-phenylene) ether and poly(2,3,6-triethyl-1,4-phenylene) ether, or a combination thereof.

The (D) impact modifier may include an aromatic vinyl-based elastomer, an olefin-based elastomer, or a combination thereof.

The (D) impact modifier may be a styrene-ethylene/butylene-styrene copolymer (SEBS).

The (E) compatibilizer may include maleic acid, maleic anhydride, maleic hydrazide, dichloromaleic anhydride, unsaturated dicarboxylic acid, fumaric acid, citric acid, citric anhydride, malic acid, agaric acid, or a combination thereof.

The polyamide/polyphenylene ether resin composition may further include at least one additive selected from a flame retardant, a lubricant, a plasticizer, a heat stabilizer, an antioxidant, a light stabilizer, a colorant, and a conductive filler.

On the other hand, according to another embodiment, a molded product manufactured from the aforementioned polyamide/polyphenylene ether resin composition is provided.

The molded product may have a moisture absorption rate of less than or equal to 1.10 %, measured at 45 °C under 95 % relative humidity according to ISO 62.

The molded product may have a shrinkage rate of less than or equal to 1.00 %, measured according to ASTM D955.

The molded product may have a flexural modulus of greater than or equal to 42,000 kgf/cm², measured according to ASTM D790.

### [Advantageous Effects]

The polyamide/polyphenylene ether resin composition has excellent impact resistance, stiffness, and appearance, and may also suppress moisture absorption and dimensional deformation caused by polyamide, so it can be widely applied to the molding of various products used for painting or non-painting, and particularly, it is possible to provide a polyamide/polyphenylene ether resin composition that can be usefully applied to automobile interior/exterior parts, and a molded product made therefrom.

### [Mode for Invention]

Hereinafter, embodiments of the present invention are described in detail. However, this is presented as an example, and the present invention is not limited thereby, and the present invention is only defined by the appended claims.

An embodiment provides a polyamide/polyphenylene ether resin composition that has improved impact resistance, stiffness, and appearance, and is capable of suppressing hygroscopicity and dimensional deformation caused by polyamide.

The polyamide/polyphenylene ether resin composition includes, based on 100 parts by weight of a base resin which includes (A) 30 wt% to 60 wt% of a polyphenylene ether resin, (B) 25 wt% to 55 wt% of polyamide 66 resin, and (C) 5 wt% to 40 wt% of a polyamide resin containing a long aliphatic chain, (D) 2 parts by weight to 6 parts by weight of an impact modifier, (E) 0.5 parts by weight to 1 part by weight of a compatibilizer, and (F) 10 parts by weight to 30 parts by weight of a plate-shaped filler, wherein a weight ratio (B:C) of the (B) polyamide 66 resin and the (C) polyamide resin containing a long aliphatic chain satisfies 1:1 to 8:1.

Hereinafter, each component included in the polyamide/polyphenylene ether resin composition is described in detail.

### (A) Polyphenylene Ether Resin

The polyphenylene ether resin may be a resin including a polyphenylene ether polymer, a mixture of a polyphenylene ether polymer and a vinyl aromatic polymer, or a modified polyphenylene ether polymer in which a reactive monomer reacts with a polyphenylene ether polymer, and two or more types may be mixed and used.

The polyphenylene ether polymer may include one or more selected from poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-trimethyl-1,4-phenylene) ether, or a copolymer of poly(2,6-dimethyl-1,4-phenylene) ether and poly(2,3,6-triethyl-1,4-phenylene) ether.

For example, poly(2,6-dimethyl-1,4-phenylene) ether or a copolymer of poly(2,6-dimethyl-1,4-phenylene) ether and poly(2,3,6-trimethyl-1,4-phenylene) ether may be used, and for example, poly(2,6-dimethyl-1,4-phenylene) ether may be used.

The vinyl aromatic polymer may be a polymer of a single monomer or two or more vinyl aromatic monomers selected from styrene, p-methylstyrene, α-methylstyrene, or 4-n-propylstyrene, and among them, it is effective to polymerize a vinyl aromatic monomer selected from styrene or α-methylstyrene alone or a combination thereof.

The reactive monomer may be a compound including an unsaturated carboxylic acid or an anhydride group thereof, or may be reacted to be modified with an unsaturated carboxylic acid or an anhydride group thereof, and the reactive monomer serves to react with the polyphenylene ether polymer according to an embodiment of the present invention to form a modified polyphenylene ether polymer.

The reactive monomer may be selected from citric acid, citric anhydride, maleic anhydride, maleic acid, itaconic anhydride, fumaric acid, (meth)acrylic acid, (meth)acrylic acid ester, and a combination thereof.

The method for preparing the modified polyphenylene ether polymer reacted with the reactive monomer is not particularly limited, but considering that the reaction temperature is relatively high, it is effective to perform a graft reaction in a melt-kneaded state using a phosphite-based thermal stabilizer.

An intrinsic viscosity of the polyphenylene ether according to an embodiment of the present invention is not particularly limited, but an intrinsic viscosity measured in a chloroform solvent at 25 °C may be desirably 0.2 dl/g to 0.8 dl/g, and more desirably 0.3 dl/g to 0.6 dl/g.

In the case of having an intrinsic viscosity in the above range, heat resistance and mechanical strength are improved and processing is easy.

The polyphenylene ether resin may be included in an amount of, for example 30 wt% to 60 wt%, for example 30 wt% to 50 wt% or 35 wt% to 45 wt%, based on 100 wt% of the base resin. When the amount of the polyethylene ether resin is out of the above range, compatibility, mechanical properties, and heat resistance of the polyamide/polyphenylene ether resin composition may be deteriorated.

### (B) Polyamide 66 Resin

The polyamide 66 resin includes polyamide 66. The polyamide 66 may be a type of polyamide containing amino acids, lactams, or diamines, and dicarboxylic acids as main monomer components, and may be specifically obtained by reacting hexamethylenediamine and adipic acid.

In an embodiment, the polyamide 66 imparts excellent flexibility and chemical resistance to the polyamide/polyphenylene ether resin composition. In an embodiment, the polyamide 66 has a relatively low moisture absorption rate compared with general polyamide 6. Accordingly, when the polyamide 66 is used, a moisture absorption rate and dimensional deformation of the polyamide/polyphenylene ether resin composition may be more suppressed compared with polyamide 6.

In an embodiment, the polyamide 66 resin may be included in an amount of 25 wt% to 55 wt%, for example 30 wt% to 55 wt%, 35 wt% to 55 wt%, or 40 wt% to 50 wt%, based on 100 wt% of the base resin. When the amount of the polyamide 66 resin is out of the above range, flexibility and chemical resistance of the polyamide/polyphenylene ether resin composition may be deteriorated, or processing may be difficult.

### (C) Polyamide Resin Containing Long Aliphatic Chain

The polyamide resin containing the long aliphatic chain refers to a polyamide polymer having a long aliphatic chain in the main chain of C5 or more, for example C6 or more, C8 or more, or C10 or more.

In an embodiment, the polyamide resin containing the long aliphatic chain may include, for example, one or more selected from polyamide 610, polyamide 612, polyamide 1010, polyamide 1012, and polyamide 1212.

The polyamide resin containing the long aliphatic chain may also perform a function of improving excellent flexibility and chemical resistance to the polyamide/polyphenylene ether resin composition in addition to the aforementioned polyamide 66 resin.

For this purpose, an amount of the polyamide resin containing the long aliphatic chain may be 5 wt% to 40 wt%, for example 5 wt% to 30 wt%, 5 wt% to 25 wt%, or 10 wt% to 20 wt% based on 100 wt% of the base resin.

On the other hand, since the polyamide resin containing the long aliphatic chain exhibits a lower moisture absorption rate compared with polyamide 6 or polyamide 66, in particular, when used together with polyamide 66, the moisture absorption rate and dimensional deformation of the polyamide/polyphenylene ether resin composition can be greatly suppressed.

In an embodiment, the polyamide resin containing a long aliphatic chain in the base resin satisfies a predetermined amount ratio with the polyamide 66 resin, so as to greatly suppress a moisture absorption rate and dimensional deformation while maintaining an overall physical property balance of the polyamide/polyphenylene ether resin composition.

Specifically, a weight ratio (B:C) of the (B) polyamide 66 resin and the (C) polyamide resin containing a long aliphatic chain may satisfy, for example, 1:1 to 8:1, 1:2 to 7:1, 1:2 to 6:1, or 1:2 to 5:1.

When the weight ratio (B:C) of the polyamide 66 resin to the aliphatic long chain-containing polyamide resin is less than 1:1, the amount of the polyamide resin containing a long aliphatic chain is excessively high, which may hinder flowability of the polyamide/polyphenylene ether resin composition, while when it exceeds 8:1, the effect of lowering the moisture absorption rate due to the addition of the polyamide resin containing the long aliphatic chain is difficult to exhibit.

### (D) Impact Modifier

The impact modifier may function to improve the impact resistance of the polyamide/polyphenylene ether resin composition.

As the impact modifier, an aromatic vinyl elastomer or an olefin elastomer may be used, and an aromatic vinyl elastomer and an olefin elastomer may be used in combination.

In an embodiment, the aromatic vinyl-based elastomer may be a block copolymer consisting of an aromatic vinyl compound and a conjugated diene compound; a hydrogenated block copolymer formed by hydrogenating a block copolymer consisting of an aromatic vinyl compound and a conjugated diene compound; a modified block copolymer in which the block copolymer is modified with a compound selected from α,β-unsaturated dicarboxylic acid and an α,β-unsaturated dicarboxylic acid derivatives; and a modified hydrogenated block copolymer in which the hydrogenated block copolymer is modified with a compound selected from α,β-unsaturated dicarboxylic acid and an α,β-unsaturated dicarboxylic acid derivative. In some cases, it is possible to mix and use two or more.

The aromatic vinyl compound may be styrene, p-methylstyrene, α-methylstyrene, bromostyrene, or chlorostyrene, and two or more may be combined. Styrene may be desirably used.

The aromatic vinyl-based elastomer may be derived from an aromatic vinyl compound, and may have a linear structures containing six or more A and B blocks in total as well as a linear structure including a diblock (AB block), a triblock (ABA block), a tetrablock (ABAB block), and a pentablock (ABABA block) structure.

Specific examples of the aromatic vinyl-based elastomer may be a styrene-ethylene/butylene-styrene copolymer, a styrene-butadiene-styrene copolymer, a styrene-ethylene/propylene-styrene copolymer, a styrene-isoprene-styrene copolymer, a styrene-ethylene copolymer, or a styrene-ethylene/butadiene-styrene copolymer, a modified styrene-ethylene/butylene-styrene copolymer, a modified styrene-butadiene-styrene copolymer, a modified styrene-ethylene/propylene-styrene copolymer, a modified styrene-isoprene-styrene copolymer, a modified styrene-ethylene copolymer, or a modified styrene-ethylene/butadiene-styrene copolymer which is obtained by modifying the above substances with a compound selected from α,β-unsaturated dicarboxylic acid and an α,β-unsaturated dicarboxylic acid derivative, respectively. In some cases, it is possible to mix and use two or more. Desirably, a styrene-ethylene/butylene-styrene copolymer (SEBS) may be used.

On the other hand, the olefin-based elastomer may be selected from high density polyethylene, low density polyethylene, linear low density polyethylene, an ethylene-α-olefin copolymer, and a combination thereof. In addition, the olefin-based elastomer may be modified high density polyethylene, modified low density polyethylene, modified linear low density polyethylene, and a modified ethylene-α-olefin copolymer, which are obtained by respectively modifying the aforementioned materials with at least one compound of α,β-unsaturated dicarboxylic acid or an α,β-unsaturated dicarboxylic acid derivative. In some cases, it is possible to mix and use two or more.

The olefin-based elastomer may be a copolymer polymerized with an olefin-based monomer or a copolymer of the olefin-based monomer and an acryl-based monomer.

The olefin-based monomer may be C1 to C19 alkylene, and specific examples thereof may be ethylene, propylene, isopropylene, butylene, isobutylene, or octene, which may be used alone or as a mixture.

The acryl-based monomer may be a (meth)acrylic acid alkyl ester or a (meth)acrylic acid ester. Herein, the alkyl denotes a C1 to C10 alkyl, and specific examples of the (meth)acrylic acid alkyl ester may be methyl(meth)acrylate, ethyl(meth)acrylate, propyl(meth)acrylate, and butyl(meth)acrylate, and in particular, the methyl(meth)acrylate is effective.

The olefin-based elastomer may include a reactive group capable of reacting with the polyamide. The olefin-based elastomer may have a structure in which the reactive group is grafted into a main chain consisting of the olefin-based monomer or the copolymer of the olefin-based monomer and the acryl-based monomer.

The reactive group may be a maleic anhydride group or an epoxy group.

Desirable examples of the olefin-based elastomer containing a reactive group may include a modified ethylene-α-olefin copolymer or a modified low density polyethylene which is grafted with a maleic anhydride group. This improves compatibility of polyphenylene ether and polyamide.

According to an embodiment, the impact modifier may be included in an amount of 2 parts by weight to 6 parts by weight, for example 2 parts by weight to 5 parts by weight, based on 100 parts by weight of the base resin. When the amount of the impact modifier satisfies the above ranges, particularly excellent impact resistance improvement effect may be exhibited while maintaining the balance with other physical properties of the polyamide/polyphenylene ether resin composition.

### (E) Compatibilizer

The compatibilizer may be a compound including two types of functional groups or a compound modified through a reaction in the compound including two types of functional groups. One of the functional groups is a carbon-carbon double bond or a carbon-carbon triple bond, and the other may be selected from a carboxyl group, an acid anhydride, an epoxy group, an imide group, an amide group, an ester group, an acid chloride, or a functional group of functionally equivalent thereof.

Specific examples of the compatibilizer may be maleic acid, maleic anhydride, maleic hydrazide, dichloromaleic anhydride, unsaturated dicarboxylic acid, fumaric acid, citric acid, citric anhydride, malic acid, or agaric acid. In some cases, it may be mixed and used.

Preferable examples of the compatibilizer may be maleic acid, maleic anhydride, fumaric acid, citric acid, and citric anhydride, and maleic anhydride and citric anhydride are particularly effective.

When the compatibilizer or the modified product of the compatibilizer reacts with polyphenylene ether and polyamide, the polyphenylene ether and a polyamide block copolymer are produced.

The block copolymer is distributed on the interface of two components in the polyamide/polyphenylene ether resin composition and thus stabilizes morphology of the resin composition. In particular, when the polyphenylene ether forms the morphology, in which the polyphenylene ether becomes a domain (a dispersed phase) and the polyamide becomes a matrix (a continuous phase), in the polyamide/polyphenylene ether resin composition, the block copolymer plays an important role in controlling a particle diameter of the domain to be around 1 µm and thus to have effective impact resistance.

The compatibilizer may be included in an amount of 0.5 parts by weight to 1 part by weight, for example 0.6 parts by weight to 0.9 parts by weight, based on 100 parts by weight of the base resin. When the compatibilizer is included in an amount of less than 0.5 parts by weight, the impact resistance improvement effect may not be significant, and when the amount is greater than 1 part by weight, other properties may be deteriorated.

### (F) Plate-shaped Filler

A plate-shaped filler imparts heat resistance, dimensional stability, and appearance characteristics of a polyamide/polyphenylene ether resin composition and a molded product using the same.

The plate-shaped filler may include a plate-shaped powder having a length of 100 nm to 100 µm in a long direction, a width of 50 nm to 10 µm in a short direction, and a thickness of 50 nm to 10 µm. Within the ranges, the heat resistance, dimensional stability, and appearance characteristics may be secured.

The plate-shaped filler is not particularly limited, as long as it has a plate-shaped structure, but may include, for example, talc, mica, plate-shaped silicate, graphite, clay, or a combination thereof, and desirably talc.

The talc means talc which is magnesium silicate hydrate. The talc may have a chemical formula of Mg₃(OH)₂Si₄O₁₀ and a refractive index of 1.53 to 1.56. The talc may contain a small amount of aluminum oxide, calcium oxide, iron oxide, and the like in addition to silicic acid and magnesium oxide. The talc may be commercially available products.

The talc is a plate-shaped filler having low hardness and excellent heat resistance and chemical stability. As an amount of the filler is increased in the polyamide/polyphenylene ether resin composition, a moisture absorption rate and a dimensional deformation ratio generally increase, but particularly, when the talc, a plate-shaped filler, is used, excellent appearance characteristics may be secured, compared with when a needle-shaped filler is used in the same amount. In other words, since the talc, a plate-shaped filler according to one embodiment, imparts high heat resistance, dimensional stability, and appearance characteristics without deteriorating other properties of the polyamide/polyphenylene ether resin, even though used in a smaller amount than the needle-shaped filler in order to realize high appearance characteristics, the talc is more effective than the needle-shaped filler.

The plate-shaped filler may be included in an amount of 10 parts by weight to 30 parts by weight based on 100 parts by weight of the base resin. Specifically, it may be included in an amount of 10 parts by weight to 25 parts by weight, for example, 15 parts by weight to 25 parts by weight.

When used within the ranges, a polyamide/polyphenylene ether resin composition including this and a molded product using the same may secure low surface roughness, and accordingly, excellent smoothness and reliability of the painting may be obtained during the paining of the molded product.

Particularly, when the talc is included in an amount of greater than 30 parts by weight, surface roughness is increased, failing in forming a smooth painting layer when painted on the molded product, and accordingly, requiring a separate process of smoothening the surface. On the contrary, when the talc is used in an amount of less than 10 parts by weight, heat resistance and dimensional stability may hardly be secured.

### (G) Additive

In addition to the aforementioned components (A) to (F), the polyamide/polyphenylene ether resin composition may further include at least one additive selected from a flame retardant, a lubricant, a plasticizer, a heat stabilizer, an antioxidant, a light stabilizer, a colorant, and a conductive filler. The additives may be used as a mixture of at least two depending on characteristics of a final molded product.

The flame retardant may be a material that reduces combustibility, and may include at least one of a phosphate compound, a phosphite compound, a phosphonate compound, a polysiloxane compound, a phosphazene compound, a phosphinate compound, or a melamine compound, but is not limited thereto.

The lubricant lubricates the surface of a metal contacting a resin composition having excellent low gloss characteristics during a processing, molding, or extrusion process, and thus helps flow or movement of the resin composition and may be a conventionally-used material.

The plasticizer is used to increase flexibility, process workability, or an expansion property of the resin composition, and may be a conventionally-used material.

The heat stabilizer suppresses thermal decomposition of the resin composition when kneaded or molded at a high temperature, and may be a conventionally-used material.

The antioxidant may suppress or block a chemical reaction of the aforementioned resin composition with oxygen and thus prevent decomposition of the resin composition and loss of its inherent properties, and may include at least one of phenol-type, phosphate-type, thioether-type, or amine-type antioxidants, but is not limited thereto.

The light stabilizer suppresses or blocks decomposition of the resin composition from ultraviolet (UV) and thus a color change or loss of a mechanical property, and may desirably include titanium oxide.

The colorant may include a pigment or dye.

The conductive filler may include, for example, carbon black, carbon fibrils, or a combination thereof as an additive used to impart conductivity to the polyamide/polyphenylene ether resin composition.

A type of the carbon black is not particularly limited, but conductive carbon black may be used, and specific examples of the carbon black may include graphitized carbon, furnace black, acetylene black, and ketjen black.

The carbon fibril is a fiber-type carbon material including a carbon element in a mass amount of greater than or equal to 90 wt%. Among the carbon fibrils, carbon nanotubes may be desirably used. The carbon nanotubes have a large aspect ratio and a large specific surface area as well as excellent mechanical characteristics, electrical characteristics, and thermal characteristics, and may be used as an effective engineering plastic material.

The carbon nanotubes may be classified into single-walled carbon nanotubes, double-walled carbon nanotubes, and multi-walled carbon nanotubes depending on the number of walls, and also, classified into zigzag, armchair, and chiral structures depending on an angle at which graphene surfaces are rolled, which may be variously used without being limited to the types and structures, but the multi-walled carbon nanotubes may be desirably used.

The carbon nanotubes have no particularly-limited size, but a diameter ranging from 0.5 nm to 100 nm, and specifically, 1 nm to 10 nm, and a length of 0.01 µm to 100 µm, and specifically, 0.5 µm to 10 µm, is desirable. Within the diameter and length ranges, excellent conductivity and processability are obtained.

In addition, the carbon nanotubes have a large aspect ratio (L/D) due to the aforementioned sizes, and carbon nanotubes with L/D of 100 to 1000 may bring about an excellent conductivity improvement effect.

The additive may be included in an amount of 0.1 parts by weight to 20 parts by weight based on 100 parts by weight of the base resin. When the additive is included out of the range, mechanical properties of the polyamide/polyphenylene ether resin composition may be deteriorated, or a molded product made by using the resin composition may have a defective appearance.

On the other hand, another embodiment provides a molded product including the thermoplastic resin composition according to the embodiment. The molded product may be manufactured by using the thermoplastic resin composition in various methods known in the art, for example, injection molding, extrusion molding, and the like.

The molded product may have a moisture absorption rate of less than or equal to 1.10 %, for example, less than or equal to 1.09%, or less than or equal to 1.08 % at 45 °C under 95 % relative humidity according to ISO 62.

The molded product may have a shrinkage rate of less than or equal to 1.00 %, for example, less than or equal to 0.90 %, or less than or equal to 0.85 %, measured according to ASTM D955.

The molded product may have a flexural modulus of at least greater than or equal to 42,000 kgf/cm², greater than or equal to 42,500 kgf/cm², greater than or equal to 43,000 kgf/cm², or 42,000 kgf/cm² to 50,000 kgf/cm².

In other words, the molded product is formed by using the aforementioned polyamide/polyphenylene ether resin composition and thus has excellent impact resistance and flowability. In addition, the molded product may be adjusted to have an excellent flexural modulus by controlling an amount of long aliphatic chain-containing polyamide included along with polyamide 66 and/or an amount ratio of the polyamide 66 and the long aliphatic chain-containing polyamide. Accordingly, the molded product may be suppressed from hygroscopicity caused by the polyamide and the resulting dimensional deformation.

In addition, the molded product exhibits excellent appearance characteristics due to the above plate-shaped inorganic filler and thus may be widely applied to molding of various products used for painting or non-painting, and particularly, is useful for automobile interior/exterior parts. On the other hand, for example, when the molded product includes the above conductive filler, the molded product may be easily painted by using online electrostatic painting or the like. Specific examples of the molded product may include parts such as an automobile fender and the like, but are not limited thereto.

Hereinafter, preferred examples of the present invention will be described. These examples, however, are not in any sense to be interpreted as limiting the scope of the invention.

### Examples 1 to 2 and Comparative Examples 1 to 6

The polyamide/polyphenylene ether resin compositions according to Examples 1 and 2 and Comparative Examples 1 to 6 were respectively prepared to have each component amount ratio shown in Table 1.

The components shown in the main feeding section of Table 1 were dry-mixed and continuously quantitatively injected into a main feeding port of a twin-screw extruder, TEX-40 (Japan Steel Works (JSW) Ltd.). The components in the side feeding section of Table 1 were continuously quantitatively injected into the side feeding port of the twin-screw extruder, and then melted/kneaded. Herein, the extruder was set at a screw rotation speed of 400 rpm and at an overall production rate of about 100 kg per hour. Subsequently, a pelletized resin composition was obtained through the extruder.

**(Table 1)**

| Input position | Component | Unit | Ex. 1 | Ex. 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|
| Main feeding | (A) | wt% | 40 | 40 | 40 | 40 | 40 | 40 | 40 | 40 |
| | (D) | parts by weight | 4 | 4 | 4 | 4 | 4 | 4 | 4 | 4 |
| | (E) | parts by weight | 0.8 | 0.8 | 0.8 | 0.8 | 0.8 | 0.8 | 0.8 | 0.8 |
| | (G) | parts by weight | 0.3 | 0.3 | 0.3 | 0.3 | 0.3 | 0.3 | 0.3 | 0.3 |
| Side feeding | (B) | wt% | 50 | 40 | 60 | 54 | 20 | 0 | 50 | 50 |
| | (C) | wt% | 10 | 20 | 0 | 6 | 40 | 60 | 10 | 10 |
| | (F) | parts by weight | 20 | 20 | 20 | 20 | 20 | 20 | 5 | 35 |

The components shown in Table 1 are illustrated as follows.

### (A) Polyphenylene Ether Resin

A polyphenylene ether resin product of China National Bluestar Co., Ltd. was used.

### (B) Polyamide 66

A polyamide 66 resin product of Solvay was used.
(C) Polyamide Containing Long Aliphatic Chain
A polyamide 612 resin product of Shandong Dongcheon Co., Ltd. was used.

### (D) Impact Modifier

A SEBS product of Kraton Corp. was used.

### (E) Compatibilizer

Citric acid of Samchun Chemical Co. was used.

### (F) Plate-shaped Filler

Talc made by Imerys was used.

### (G) Additive (Stabilizer)

A hindered phenol-based antioxidant product of BASF was used.

### Property Evaluation Result

The results of property evaluation of Examples 1 and 2 and Comparative Examples 1 to 6 are shown in Table 2.
(1) Impact resistance (kJ/m²): Notch Izod impact strengths of 1/8 inch-thick specimens were measured at room temperature according to ASTM D256.
(2) Stiffness (kgf/cm²): Flexural modulus of the 1/8 inch-thick specimens was measured according to ASTM D790.
(3) Moisture absorption rate (%): A moisture absorption rate was measured at 45 °C under relative humidity of 95 % according to ISO 62.
(4) Shrinkage rate (%): A shrinkage rate was measured according to ASTM D955.
(5) Appearance: The specimens having no curvature, warpage, etc., mentioned in ASTM D2457 were observed with respect to surface defects (protrusions) thereon with the naked eye. Subsequently, the number of surface defects of each specimen was classified into ○ (3 or less), Δ (4 to 7), and X (10 or more).

**(Table 2)**

| | Ex. 1 | Ex. 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Impact resistance (kJ/m²) | 5 | 5 | 6 | 6 | 4 | 2 | 12 | 2 |
| Stiffness (kgf/cm²) | 45,000 | 43,000 | 48,000 | 47,000 | 41,000 | 39,000 | 26,000 | 67,000 |
| Moisture absorption rate (%) | 1.08 | 1.05 | 1.16 | 1.14 | 1.00 | 0.94 | 1.36 | 0.78 |
| Shrinkage rate (%) | 0.82 | 0.82 | 1.10 | 0.88 | 0.79 | 0.77 | 1.24 | 0.64 |
| Appearance | ○ | ○ | ○ | ○ | Δ | Δ | ○ | X |

Referring to Tables 1 and 2, when each polyamide/polyphenylene ether resin composition including a plate-shaped inorganic filler within the aforementioned content range and simultaneously a polyamide 66 resin and a polyamide resin containing a long aliphatic chain in the aforementioned ratios was used, molded products having a minimized moisture absorption rate and shrinkage rate as well as maintaining excellent impact resistance, stiffness, and appearance were manufactured.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A polyamide/polyphenylene ether resin composition, comprising based on 100 parts by weight of a base resin which comprises
(A) 30 wt% to 60 wt% of a polyphenylene ether resin,
(B) 25 wt% to 55 wt% of polyamide 66 resin, and
(C) 5 wt% to 40 wt% of a polyamide resin containing a long aliphatic chain,
(D) 2 parts by weight to 6 parts by weight of an impact modifier,
(E) 0.5 parts by weight to 1 part by weight of a compatibilizer, and
(F) 10 parts by weight to 30 parts by weight of a plate-shaped filler,
wherein a weight ratio (B:C) of the (B) polyamide 66 resin and the (C) polyamide resin containing a long aliphatic chain satisfies 1:1 to 8:1.

2. The polyamide/polyphenylene ether resin composition of claim 1, wherein the (F) plate-shaped filler comprises talc, mica, plate-shaped silicate, graphite, clay, or a combination thereof.

3. The polyamide/polyphenylene ether resin composition of claim 1 or claim 2, wherein the (C) polyamide resin containing a long aliphatic chain comprises at least one selected from polyamide 610, polyamide 612, polyamide 1010, polyamide 1012, and polyamide 1212.

4. The polyamide/polyphenylene ether resin composition of any one of claim 1 to claim 3, wherein the (A) polyphenylene ether resin comprises poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-trimethyl-1,4-phenylene) ether, a copolymer of poly(2,6-dimethyl-1,4-phenylene) ether and poly(2,3,6-triethyl-1,4-phenylene) ether, or a combination thereof.

5. The polyamide/polyphenylene ether resin composition of any one of claim 1 to claim 4, wherein the (D) impact modifier comprises an aromatic vinyl-based elastomer, an olefin-based elastomer, or a combination thereof.

6. The polyamide/polyphenylene ether resin composition of any one of claim 1 to claim 5, wherein the (D) impact modifier is a styrene-ethylene/butylene-styrene copolymer (SEBS).

7. The polyamide/polyphenylene ether resin composition of any one of claim 1 to claim 6, wherein the (E) compatibilizer comprises maleic acid, maleic anhydride, maleic hydrazide, dichloromaleic anhydride, unsaturated dicarboxylic acid, fumaric acid, citric acid, citric anhydride, malic acid, agaric acid, or a combination thereof.

8. The polyamide/polyphenylene ether resin composition of any one of claim 1 to claim 7, which further comprises at least one additive selected from a flame retardant, a lubricant, a plasticizer, a heat stabilizer, an antioxidant, a light stabilizer, a colorant, and a conductive filler.

9. A molded product manufactured from the polyamide/polyphenylene ether resin composition of any one of claim 1 to claim 8.

10. The molded product of claim 9, wherein the molded product has a moisture absorption rate of less than or equal to 1.10 %, measured at 45 °C under 95 % relative humidity according to ISO 62.

11. The molded product of claim 9 or claim 10, wherein the molded product has a shrinkage rate of less than or equal to 1.00 %, measured according to ASTM D955.

12. The molded product of any one of claim 9 to claim 11, wherein the molded product has a flexural modulus of greater than or equal to 42,000 kgf/cm², measured according to ASTM D790.
